# EUROPÄISCHE PATENTSCHRIFT

(11) **EP 2 885 169 B1**
(45) Veröffentlichungstag und Bekanntmachung des Hinweises auf die Patenterteilung: **27.04.2016**
(21) Anmeldenummer: 13753149.7
(22) Anmeldetag: 19.08.2013
(51) Int. Cl.: B60S 3/04

(54) **DOSIERVORRICHTUNG UND VERFAHREN ZUR DOSIERUNG VON ZUSATZMITTELN IN BEHANDLUNGSFLÜSSIGKEITEN EINER FAHRZEUGBEHANDLUNGSANLAGE**
METERING DEVICE AND METHOD FOR METERING ADDITIVES INTO TREATMENT LIQUIDS OF A VEHICLE TREATMENT INSTALLATION
DISPOSITIF DE DOSAGE ET PROCÉDÉ DE DOSAGE D'ADDITIFS DANS DES LIQUIDES DE TRAITEMENT D'UNE INSTALLATION DE TRAITEMENT POUR VÉHICULE

(30) Priorität: 20.08.2012 DE 102012107618
(43) Veröffentlichungstag der Anmeldung: 24.06.2015
(73) Patentinhaber: WashTec Holding GmbH, 86153 Augsburg (DE)
(72) Erfinder: AUER, Robert, 86391 Stadtbergen (DE); KISER, Franz, 86510 Ried (DE); WIMMER, Georg, 86444 Affing (DE)
(74) Vertreter: Charrier, Rapp & Liebau
(86) Internationale Anmeldenummer: PCT/EP2013/067246
(87) Internationale Veröffentlichungsnummer: WO 2014/029740

(56) Entgegenhaltungen:
- EP-A1- 0 896 914
- EP-A1- 1 414 682
- WO-A1-03/010037
- DE-A1-102006 022 477

## Beschreibung

Die Erfindung betrifft eine Dosiervorrichtung zur Dosierung von Zusatzmitteln in Behandlungsflüssigkeiten einer Fahrzeugbehandlungsanlage nach dem Oberbegriff des Anspruchs 1. Die Erfindung betrifft ferner ein Verfahren zur Dosierung von Zusatzmitteln in Behandlungsflüssigkeiten einer Fahrzeugbehandlungsanlage mittels einer solchen Dosiervorrichtung.

Zum Betrieb von Fahrzeugwaschanlagen werden diese mit verschiedenen chemischen Zusatzmitteln, wie z.B. Waschshampoos, Schaumbildner, Wachse, Trocknungshilfsmittel, Seifen, Felgenreiniger, Insektenentferner, etc. versorgt, um diese chemischen Zusatzmittel der Behandlungsflüssigkeit (in der Regel Wasser) zuzuführen, mit der das Fahrzeug behandelt wird. Die chemischen Zusatzmittel liegen dabei in der Regel als wässrige Lösung abgefüllt in Vorratsbehältern vor, aus denen die Zusatzmittel über darin eingeführte Schläuche mittels einer Pumpe abgesaugt werden. Häufig liegen die Vorratsbehälter in Form von Kanistern vor. Die Handhabung solcher Kanister ist sehr umständlich, für das Bedienpersonal kräftezehrend und auch gesundheitsgefährdend, weil beim Austausch eines geleerten Kanisters gegen einen gefüllten Kanister die teilweise gesundheitsgefährdenden chemischen Zusatzmittel herausspritzen können.

Aus der EP 1 414 682-A ist eine Vorrichtung zur Versorgung einer Fahrzeugswaschanlage mit chemischen Zusatzstoffen bekannt, mit der ein einfaches und kraftsparendes sowie schnelles Nachfüllen der chemischen Zusatzmittel ermöglicht wird und bei der gleichzeitig geringere Lagerhaltungskosten für die Lagerung der Vorratsbehälter anfallen. Hierfür liegt das Zusatzmittel in hochkonzentrierter Form vor und ist in einer Kartusche abgefüllt. Die Kartusche wird an eine Aufnahmevorrichtung der Fahrzeugwaschanlage angesetzt, so dass das in der Kartusche enthaltene Zusatzmittel je nach Bedarf kontinuierlich aus der Kartusche entnommen werden kann. Die hochkonzentrierten Zusatzmittel können dabei in fester, pastöser, flüssiger, pulverisierter oder tablettenförmiger Form vorliegen und sind in der Kartusche gekapselt. Ist eine Kartusche geleert, kann diese durch eine neue, befüllte Kartusche ersetzt werden. Dadurch entfällt ein mühsames und zeitaufwändiges Nachfüllen des Zusatzmittels in den Vorratsbehälter.

Die EP 0896914 A1 beschreibt ein Fahrzeugwaschsystem sowie ein Verfahren zum Nachrüsten eines Fahrzeugwaschsystems, in dem konzentrierte Waschchemikalien und Wachse bevorratet werden können. Das Waschsystem umfasst ein Reservoir, das ein Konzentrat einer Waschchemikalie oder eines Wachs enthält, sowie eine Förderpumpe, die mit dem Reservoir in Verbindung steht, einen Kontrollblock mit einer Konzentrat-Zufuhrleitung, einer Bypass-Leitung und einer Konzentrat-Abfuhrleitung, wobei die Bypass-Leitung und die Konzentrat-Abfuhrleitung mit der Zufuhrleitung in Verbindung stehen, die Konzentrat-Zufuhrleitung mit der Pumpe gekoppelt ist und die Köntrolleinrichtung Mittel zur Regulierung des Flusses von Konzentrat durch die Bypass-Leitung umfasst. Das System weist weiterhin einen Sprühbogen mit einer Konzentrat-Zufuhrleitung und einer Wasser-Zufuhrleitung auf. Das Konzentrat in der Konzentrat-Zufuhrleitung des Sprühbogens wird mit Wasser aus der Wasserleitung vermischt und über eine Mehrzahl von Sprühdüsen in dem Sprühbogen versprüht. Dieses System ermöglicht es, das zugeführte Volumen von Konzentrat zu dem Sprühbogen zu steuern, wo das Konzentrat mit Wasser vermischt und auf ein Fahrzeug gesprüht wird. Das Verfahren zum Nachrüsten einer bestehenden Fahrzeugwascheinrichtung mit einem solchen System ermöglicht dabei die Umstellung von herkömmlichen Waschchemikalien und Wachsen auf hochkonzentrierte Chemikalien, ohne den Austausch von Einrichtungen oder Umbauten in der Waschanlage.

Aus der WO2008/125665 A2 ist eine Fahrzeugwaschanlage und ein Verfahren zur Dosierung von Zusatzstoffen in Behandlungsflüssigkeiten einer solchen Fahrzeugwaschanlage bekannt, wobei die Fahrzeugwaschanlage mehrere Kartuschenaufnahmen zur Aufnahme von Kartuschen aufweist, in denen (verschiedene) Zusatzstoffe für die Behandlungsflüssigkeiten enthalten sind. Die Fahrzeugwaschanlage umfasst ferner eine (einzige) Dosiereinheit zum Dosieren der Zusatzstoffe aus den Kartuschen in die Behandlungsflüssigkeit sowie eine Steuereinheit zur Ansteuerung der Dosiereinheit. Die Kartuschen sind dabei mit einem Datenträger versehen, welcher Daten zum Inhalt der Kartuschen enthält, welche mittels einer Sende-/Empfangseinheit ausgelesen und an die Steuereinheit weitergeleitet werden können, so dass die Steuereinheit eine bestimmte Kartusche anhand der Kartuschendaten auswählen kann, um den in der Kartusche enthaltenen Zusatzstoff in geeigneter Menge in die Behandlungsflüssigkeit zu dosieren. Bevorzugt handelt es sich bei dem Datenträger um einen Transponder. Während des Betriebs der Fahrzeugwaschanlage wird die von einer in die Kartuschenaufnahme eingesetzten Kartusche abgegebene Menge an Zusatzstoff anhand der von der Steuereinheit vorgegebenen Steuerbefehle für die Dosiervorrichtung berechnet, so dass ein Leergehen der Kartusche rechtzeitig erkannt und angezeigt werden kann. Dadurch kann eine aufwendige und störanfällige Füllstandsmessung des Füllstands des Zusatzstoffs in der Kartusche vermieden werden.

Die bekannten Vorrichtungen und Verfahren zur Dosierung von Zusatzmitteln in Behandlungsflüssigkeiten von Fahrzeugbehandlungsanlagen erweisen sich insofern als nachteilig, als die Kartuschen, in denen die Zusatzmittel insbesondere in hochkonzentrierter Form vorliegen, nicht vollständig entleert werden können, ohne dass die Fahrzeugbehandlungsanlage für den Austausch einer im Wesentlichen geleerten Kartusche gegen eine neue, befüllte Kartusche stillgesetzt werden muss. Zwar erhält bspw. der Bediener der aus der WO2008/125456 A2 bekannten Fahrzeugwaschanlage rechtzeitig vor dem Leergehen einer Kartusche einen entsprechenden Hinweis, so dass eine weitgehend geleerte Kartusche rechtzeitig vor ihrem vollständigen Entleeren durch eine neue, gefüllte Kartusche ausgetauscht werden kann. Zum Austauschen der Kartusche muss jedoch die Fahrzeugwaschanlage stillgesetzt werden und der Austausch einer weitgehend geleerten Kartusche muss noch vor ihrem vollständigen Entleeren erfolgen, um zu verhindern, dass der Inhalt der entsprechenden Kartusche beim Betrieb der Fahrzeugwaschanlage nicht zur Verfügung steht. Darüber hinaus erweisen sich die bekannten Vorrichtungen und Verfahren zur Dosierung von Zusatzmitteln in die Behandlungsflüssigkeiten von Fahrzeugbehandlungsanlagen auch deshalb als nachteilig, weil ggf. innerhalb kürzerer Zeitabstände und zu ungünstigen Zeiten, beispielsweise am Wochenende, mehrere Kartuschen ausgetauscht werden müssen, wobei für den Austausch jeder einzelnen Kartusche u.U. der Bediener einen weiten Anfahrtsweg zurücklegen muss, um die weitgehend geleerten Kartuschen gegen neue Kartuschen auszutauschen.

Hiervon ausgehend liegt der Erfindung die Aufgabe zugrunde, eine gattungsgemäße Dosiervorrichtung sowie ein Verfahren zur Dosierung von Zusatzmitteln in Behandlungsflüssigkeiten einer Fahrzeugbehandlungsanlage so weiter zu bilden, dass eine vollständige Entleerung der Vorratsbehälter, in denen die Zusatzmittel enthalten sind, sowie ein rechtzeitiger und unkomplizierter Austausch eines vollständig geleerten Vorratsbehälters ermöglicht wird, ohne dass für den Austausch eines geleerten Vorratsbehälters gegen einen gefüllten.Vorratsbehälter die Fahrzeugbehandlungsanlage still gesetzt werden muss. Die Dosiervorrichtung und das Verfahren zur Dosierung von Zusatzmitteln in Behandlungsflüssigkeiten von Fahrzeugbehandlungsanlagen sollen es ferner ermöglichen, mehrere (weitgehend oder vollständig) geleerte Vorratsbehälter gleichzeitig gegen neue, gefüllte Vorratsbehälter austauschen zu können, um dadurch einen möglichst effizienten Austausch der geleerten Vorratsbehälter zu gewährleisten, ohne die Fahrzeugbehandlungsanlage für den Austausch der Vorratsbehälter still setzen zu müssen.

Diese Aufgaben werden mit einer Dosiervorrichtung mit den Merkmalen des Anspruchs 1 sowie mit einem Verfahren mit den Merkmalen des Anspruchs 13 gelöst.

Die erfindungsgemäße Dosiervorrichtung umfasst hierfür einen austauschbaren Vorratsbehälter und eine mit dem Vorratsbehälter verbundene Dosierpumpe, welche ein in dem Vorratsbehälter enthaltenes Zusatzmittel in die Behandlungsflüssigkeit der Fahrzeugbehandlungsanlage dosiert. Um eine ausreichend lange Restlaufzeit der Dosiervorrichtung und damit der Fahrzeugbehandlungsanlage zu gewährleisten, wenn der Vorratsbehälter weitgehend geleert worden ist, ist bei der erfindungsgemäßen Dosiervorrichtung ein in der Dosiervorrichtung integrierter Vorratstank vorgesehen, welcher einerseits mit der Dosierpumpe und andererseits mit dem Vorratsbehälter in Verbindung steht. Anders als der austauschbare Vorratsbehälter ist der integrierte Vorratstank nicht entnehmbar bzw. austauschbar, sondern fest in der Dosiervorrichtung integriert. Die Dosierpumpe ist dabei zweckmäßig nur über den integrierten Vorratstank mit dem austauschbaren Vorratsbehälter verbunden.

Der austauschbare Vorratsbehälter weist zweckmäßig eine Auslassöffnung auf, welche mit einer Einlassöffnung im Vorratstank in Verbindung steht, um das in dem Vorratsbehälter enthaltene Zusatzmittel in den Vorratstank zu überführen und diesen mit dem Zusatzmittel zu befüllen. Bevorzugt befindet sich die Einlassöffnung im oberen Bereich des Vorratstanks, um zu gewährleisten, dass das von dem austauschbaren Vorratsbehälter kommende Zusatzmittel so in den integrierten Vorratstank überführt werden kann, dass dieser im Wesentlichen vollständig mit dem Zusatzmittel gefüllt werden kann.

Bevorzugt ist in dem Vorratstank und/oder im Vorratsbehälter ein Füllstandsmessgerät oder ein Durchflussmessgerät angeordnet. Wird ein Füllstandsmessgerät verwendet, befindet sich dieses bevorzugt im oberen Bereich des Vorratstanks, in dem sich auch die Einlassöffnung befindet. Wird ein Durchflussmessgerät verwendet, ist dieses zweckmäßig in der Einlassöffnung des Vorratstanks angeordnet, um die Durchflussmenge des Zusatzmittels zu erfassen, das von dem austauschbaren Vorratsbehälter in den integrierten Vorratstank überführt wird.

Bevorzugt ist in dem integrierten Vorratstank eine Belüftungsöffnung vorgesehen. Diese ist zweckmäßig am oberen Ende eines Steigrohrs angeordnet. Die Belüftungsöffnung gewährleistet eine Belüftung des Vorratstanks für den Fall, dass ein geleerter Vorratsbehälter (Kartusche) aus der Dosiervorrichtung genommen wird und nicht wieder durch einen neuen Vorratsbehälter ersetzt wird. In diesem Fall wird die Einlassöffnung im Vorratstank verschlossen. Über die Dosierpumpe wird das Zusatzmittel aus dem integrierten Vorratstank entnommen und es fließt kein neues Zusatzmittel aus dem Vorratsbehälter (Kartusche) nach. Im Vorratstank würde sich ohne eine zusätzliche Belüftung ein Unterdruck einstellen, den die Dosierpumpe nicht mehr überwinden kann, wenn die Einlassöffnung im Vorratstank bei abgenommenem Vorratsbehälter verschlossen wird. Sobald aus dem Vorratstank Zusatzmittel entnommen wird (ohne dass ein Vorratsbehälter (Kartusche) in der Dosiervorrichtung steckt) sinkt der Pegel in dem am Vorratstank angeordneten Steigrohr und schließlich wird der Vorratstank über die Belüftungsöffnung im Steigrohr belüftet. Beim Einsetzen eines neuen Vorratsbehälters (Kartusche) wird der integrierte Vorratstank und das Steigrohr wieder mit Zusatzmittel gefüllt.

Die Dosierpumpe wird von einer Steuereinheit gesteuert, wobei die Steuereinheit eine Datenverarbeitungseinrichtung umfasst. Die vom Füllstandsmessgerät bzw. vom Durchflussmessgerät erfassten Werte werden in einer bevorzugten Ausführungsform der Erfindung der Steuereinheit zugeführt um den erfassten Füllstand bzw. die erfasste Durchflussmenge in der Datenverarbeitungseinrichtung der Steuereinheit zur Steuerung der Dosierpumpe verarbeiten zu können. Die Steuereinheit steuert die Dosierpumpe dabei zweckmäßig in Abhängigkeit von Parametern, welche der Datenverarbeitungseinrichtung zugeführt werden oder welche in einem Datenspeicher der Datenverarbeitungseinrichtung abgespeichert sind. Die Parameter, die zur Steuerung der Dosierpumpe durch die Steuereinheit berücksichtigt werden, können beispielsweise Umgebungsparameter umfassen, wie z.B. die Umgebungstemperatur, den Luftdruck, die Luftfeuchte und Niederschlagswerte. Die Parameter können ferner auch Materialparameter des Zusatzmittels und/oder der Behandlungsflüssigkeit umfassen, wie z.B. die Viskosität oder die Dichte des Zusatzmittels oder den Härtegrad und/oder den pH-Wert der Behandlungsflüssigkeit.

In einem bevorzugten Ausführungsbeispiel ist die Steuereinheit über eine Fernsteuerung mittels einer Datenleitung oder drahtlosen Datenverbindung, beispielsweise einer Funk- oder Mobilfunk-Verbindung, von einem entfernten Ort ansteuerbar.

Bevorzugt ist der austauschbare Vorratsbehälter mit einem Datenträger versehen, welcher Daten zu dem im Vorratsbehälter enthaltenen Zusatzmittel enthält. Bei den Daten zu dem Zusatzmittel kann es sich beispielsweise um die genaue Bezeichnung, die chemische Zusammensetzung, die Konzentration, die Dichte und die Viskosität, empfohlene Verarbeitungstemperaturen, das Mindesthaltbarkeitsdatum oder um ein empfohlenes Verdünnungsverhältnis mit einem Lösemittel, etc. handeln. Die in dem Datenträger gespeicherten Daten zu dem im Vorratsbehälter enthaltenen Zusatzmittel können dann mittels einer Sende-/Empfangseinheit ausgelesen und an die Datenverarbeitungseinrichtung der Steuereinheit übermittelt werden. Umgekehrt ist es auch möglich, mittels der Sende-/Empfangseinheit Daten in dem Datenträger des austauschbaren Vorratsbehälters abzuspeichern. So ist es beispielsweise möglich, den Füllstand eines teilweise geleerten austauschbaren Vorratsbehälters auf dem Datenträger abzuspeichern, wenn der Vorratsbehälter entnommen und für eine spätere Verwendung gelagert werden soll.

Die erfindungsgemäße Dosiervorrichtung wird bestimmungsgemäß zur Dosierung von Zusatzmitteln in Behandlungsflüssigkeiten einer Fahrzeugbehandlungsanlage verwendet, indem zunächst ein gefüllter Vorratsbehälter bereit gestellt wird, der das Zusatzmittel zweckmäßig in hochkonzentrierter Form enthält. Der gefüllte Vorratsbehälter wird zunächst in eine dafür vorgesehene Aufnahme der Dosiervorrichtung eingesetzt. Anschließend wird eine Verbindung zwischen dem austauschbaren Vorratsbehälter und dem integrierten Vorratstank hergestellt, um das im austauschbaren Vorratsbehälter enthaltene Zusatzmittel in den Vorratstank zu überführen, bis dieser vollständig gefüllt ist. Danach kann mittels der Dosierpumpe das im Vorratstank enthaltene Zusatzmittel aus dem Vorratstank abgesaugt und in einer voreingestellten Dosiermenge und mit einer eingestellten Dosierleistung in die Behandlungsflüssigkeit eindosiert werden.

Bevorzugt wird während des Betriebs der Dosiervorrichtung der Füllstand des Zusatzmittels in dem Vorratstank oder der Durchfluss des Zusatzmittels vom Vorratsbehälter in den Vorratstank erfasst. Sobald der erfasste Füllstand oder die erfasste Durchflussmenge einen vorgegebenen Grenzwert unterschreitet, gibt die Steuereinheit ein Signal ab, wobei das Signal ein optisches oder ein akustisches Signal sein kann. Das Signal kann auch über eine Datenleitung oder eine drahtlose Datenverbindung an den Aufenthaltsort eines Bedieners übermittelt werden, um dem Bediener den erfassten Füllstand oder die erfasste Durchflussmenge zu übermitteln. Zweckmäßig berechnet die Datenverarbeitungseinrichtung der Steuereinheit aus dem erfassten Füllstand oder aus der erfassten Durchflussmenge eine noch zu erwartende Restlaufzeit der Dosiervorrichtung. Die Restlaufzeit wird dabei im Wesentlichen durch das Volumen des integrierten Vorratstanks sowie die gewählte Dosierleistung der Dosiervorrichtung bestimmt.

Die gewünschte Dosierleistung der Dosiervorrichtung während der Restlaufzeit wird zweckmäßig unter Berücksichtigung des erfassten Füllstands oder der erfassten Durchflussmenge und unter Berücksichtigung von Umgebungsparametern oder Materialparameter berechnet und auf einen geeigneten Soll-Wert eingestellt. Bei der Berechnung eines geeigneten Soll-Werts für die Dosierleistung kann zweckmäßig auch die bisherige Ist-Dosierleistung der Dosiervorrichtung berücksichtigt werden, welche beispielsweise durch eine Erfassung der Dosiermenge pro Zeiteinheit über eine Hubzählung der Dosierpumpe ermittelt werden kann.

Eine Fahrzeugbehandlungsanlage kann zweckmäßig mit einer Mehrzahl von Dosiervorrichtungen gemäß der Erfindung ausgestattet werden, wobei jede Dosiervorrichtung eine Aufnahme für einen austauschbaren Vorratsbehälter, einen integrierten Vorratstank und eine Dosierpumpe aufweist und die Dosierpumpen der einzelnen Dosiervorrichtungen von einer zentralen Steuereinheit gesteuert werden. Dies ermöglicht es, die Behandlungsflüssigkeit gleichzeitig oder sequentiell mit mehreren unterschiedlichen Zusatzstoffen zu beaufschlagen, indem die in den austauschbaren Vorratsbehältern enthaltenen Zusatzstoffe mittels der ihr zugeordneten Dosiervorrichtung gleichzeitig oder nacheinander in die Behandlungsflüssigkeit dosiert werden. Die Dosierung (Dosiermenge, Dosierleistung) der einzelnen Zusatzstoffe und die Zeitabfolge der Dosierungen wird dabei von der zentralen Steuereinheit gesteuert. Bevorzugt handelt es sich bei der Fahrzeugbehandlungsanlage um eine Fahrzeugreinigungsanlage zum Waschen von Fahrzeugen mit Waschbürsten und/oder Hochdruckreinigungsanlagen, zum Aufbringen von Wachs und/oder Polieren der Fahrzeugoberflächen. Die Fahrzeugbehandlungsanlage kann vorteilhaft als Portalanlage, Durchfahranlage oder als Anlage mit Zwangsförderung der Fahrzeuge ausgestattet sein.

Diese und weitere Vorteile und Besonderheiten der erfindungsgemäßen Dosiervorrichtung und des erfindungsgemäßen Verfahrens ergeben sich aus dem nachfolgend unter Bezugnahme auf die begleitenden Zeichnungen näher beschriebenen Ausführungsbeispiel. Die Zeichnungen zeigen:
- **Fig. 1:**: eine schematische Darstellung einer erfindungsgemäßen Dosiervorrichtung mit einem vollständig gefüllten Vorratsbehälter und vollständig befülltem Vorratstank;
- **Fig. 2:**: eine schematische Darstellung der Dosiervorrichtung von Figur 1 mit einem teilweise entleerten Vorratsbehälter und vollständig gefülltem Vorratstank;
- **Fig. 3:**: eine schematische Darstellung der Dosiervorrichtung von Figur 1 mit im Wesentlichen geleerten Vorratsbehälter und noch weitgehend vollständig gefülltem Vorratstank;
- **Fig. 4:**: eine schematische Darstellung der Dosiervorrichtung von Figur 1 mit vollständig geleertem Vorratsbehälter und teilweise gefülltem Vorratstank;

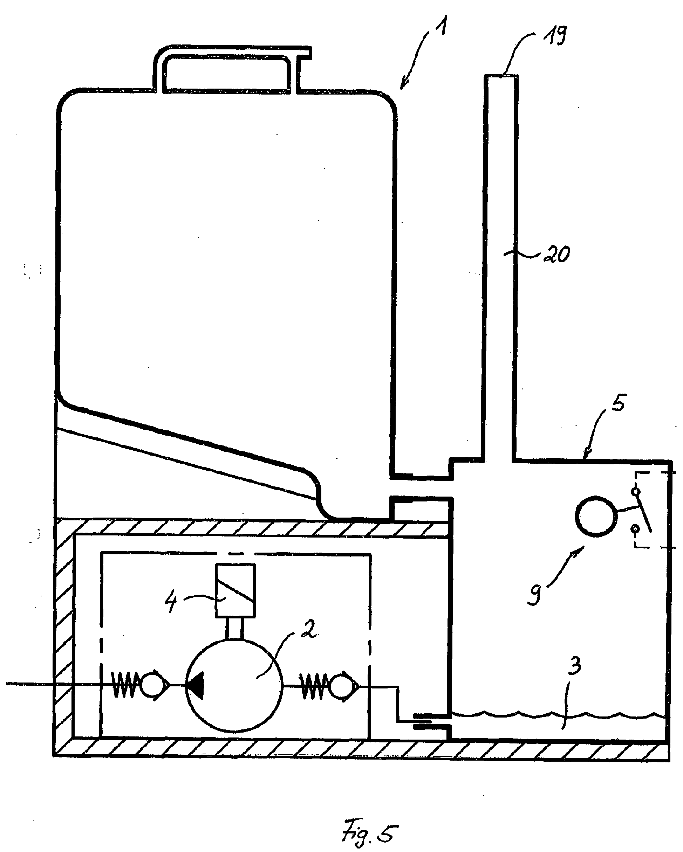

- **Fig. 5:**: eine schematische Darstellung der Dosiervorrichtung von Figur 1 mit vollständig geleertem Vorratsbehälter und weitgehend geleertem Vorratstank;
- **Fig. 6:**: eine perspektivische Darstellung eines austauschbaren Vorratsbehälters zur Verwendung in einer erfindungsgemäßen Dosiervorrichtung.

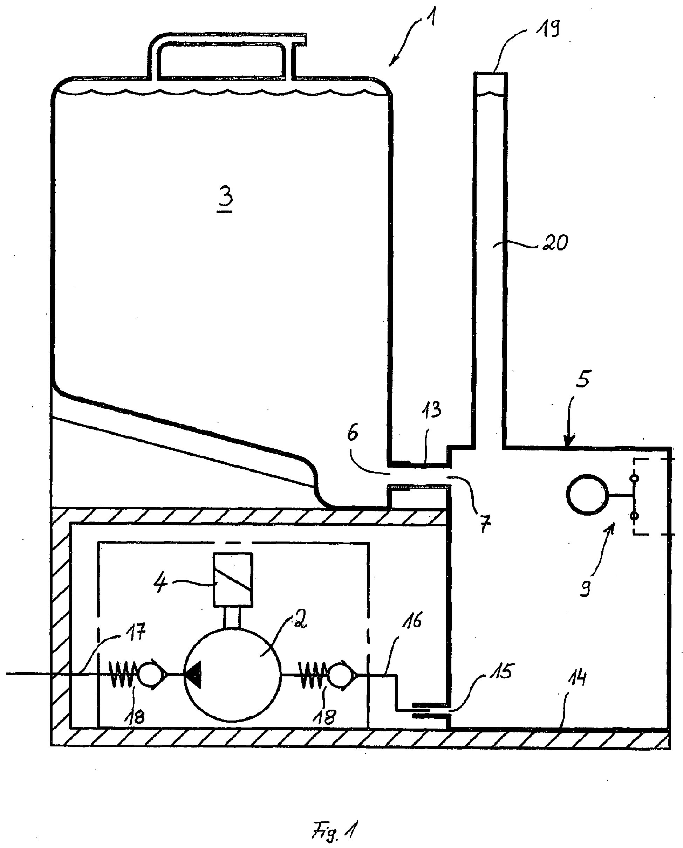

Die in Figur 1 schematisch dargestellte Dosiervorrichtung zur Dosierung von Zusatzmitteln in Behandlungsflüssigkeiten einer Fahrzeugbehandlungsanlage umfasst einen austauschbaren Vorratsbehälter 1, in dem ein chemisches Zusatzmittel 3 enthalten ist. Bei dem chemischen Zusatzmittel 3 handelt es sich beispielsweise um ein Waschshampoo, einen Schaumbildner, Seife, Wachse, Felgenreiniger, Insektenentferner, Poliermittel oder andere Zusatzstoffe, die üblicherweise für die Oberflächenbehandlung eines Fahrzeugs verwendet werden. Zweckmäßig liegen die in dem austauschbaren Vorratsbehälter 1 enthaltenen Zusatzmittel in hochkonzentrierter Form als Flüssigkeit oder als Gel vor. Die Zusatzmittel können jedoch auch in fester Form vorliegen, beispielsweise pulver-, granulat- oder tablettenförmig. Der austauschbare Vorratsbehälter 1 ist in eine zeichnerisch hier nicht dargestellte Aufnahme eingesetzt. Zweckmäßig ist die Aufnahme so ausgestaltet, dass sie den aufzunehmenden Vorratsbehälter 1 formschlüssig aufnimmt und beispielsweise mittels eines Rastmechanismus in der Aufnahme fixiert. Der Vorratsbehälter 1 ist dann in entsprechender Weise durch Lösen des Rastmechanismus aus der Aufnahme entnehmbar.

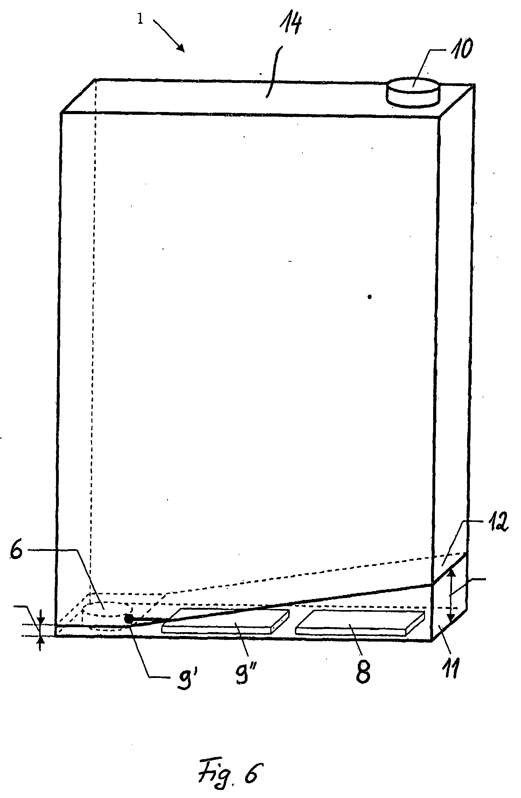

Der Vorratsbehälter 1 ist in Figur 6 im Detail gezeigt. Ein solcher Vorratsbehälter 1 ist aus der DE 10 2006 022 477 A1 bekannt. Die Offenbarung dieser Offenlegungsschrift wird daher in Bezug genommen und zum Gegenstand der Offenbarung der vorliegenden Anmeldung gemacht. Der im Wesentlichen quaderförmig ausgebildete Vorratsbehälter 1 weist einen Behälterboden 11 sowie einstückig mit dem Boden 11 verbundene Seitenwände und einen einstückig daran angeformten Deckel 14 auf. Zweckmäßig besteht der Vorratsbehälter 1 aus einem harten Kunststoff, bspw. aus Polyethylen. Im Deckel 14 ist bevorzugt eine verschließbare Einfüllöffnung 10 vorgesehen, wobei die Einfüllöffnung zweckmäßig luftdicht und flüssigkeitsdicht mit einem geeigneten Verschluss verschlossen werden kann. Im unteren Bereich des Vorratsbehälters 1 ist ein Innenraumboden 12 vorgesehen, welcher in dem in Figur 6 gezeigten Ausführungsbeispiel bezüglich des Behälterbodens 11 geneigt verläuft. Der Innenraumboden 12 kann auch parallel zum Behälterboden 11 verlaufen. Zwischen dem Innenraumboden 12 und dem Behälterboden 11 ist ein Datenträger 8 angeordnet. Bei dem Datenträger 8 handelt es sich insbesondere um einen Transponder. Der Transponder enthält Daten zum Inhalt des Vorratsbehälters 1, also insbesondere zu dem darin enthaltenen Zusatzmittel. Bei den Daten zum Inhalt des Vorratsbehälters 1 kann es sich beispielsweise um das genaue Volumen des Inhalts, um die Bezeichnung und/oder die chemische Zusammensetzung des Zusatzmittels, die Viskosität, die Dichte und ggf. weitere Materialparameter handeln. Im Behälterboden 11 ist eine Auslassöffnung 6 vorgesehen. Die Auslassöffnung 6 kann auch im unteren Bereich des Vorratsbehälters 1 in einer Seitenwand angeordnet sein. In einem bevorzugten Ausführungsbeispiel ist in der Auslassöffnung 6 des Vorratsbehälters 1 ein Durchflussmessgerät 9' mit einer daran gekoppelten elektronischen Messeinheit 9" angeordnet. Das Durchflussmessgerät 9' dient zur Erfassung der Durchflussmenge, welche aus dem Vorratsbehälter 1 durch die Auslassöffnung 6 fließt, wenn der Vorratsbehälter 1 bestimmungsgemäß in einer erfindungsgemäßen Dosiervorrichtung verwendet wird.

Die erfindungsgemäße Dosiervorrichtung umfasst darüber hinaus einen integrierten, d.h., fest in der Dosiervorrichtung eingebauten Vorratstank 5. Dieser ist zweckmäßig ebenfalls aus einem Hartkunststoff gefertigt und bspw. quaderförmig ausgebildet, wobei auch andere Formen, wie z.B. zylindrisch, möglich sind. Der integrierte Vorratstank 5 weist in seinem oberen Bereich eine Einlassöffnung 7 auf. Die Einlassöffnung 7 steht über ein Verbindungsstück 13 unmittelbar (also direkt, d.h. ohne Zwischenschaltung von Ventilen, Pumpen oder dergleichen) mit der Auslassöffnung 6 des austauschbaren Vorratsbehälters 1 in Verbindung. Bei dem Verbindungsstück 13 kann es sich beispielsweise um einen Verbindungsschlauch oder um ein Verbindungsrohr handeln. Über das Verbindungsstück 13 kann das sich in dem Vorratsbehälter 1 befindliche Zusatzmittel 3 vom Vorratsbehälter 1 in den integrierten Vorratstank 5 überführt werden, so dass sich in dem Vorratstank 5 reines (d.h. unverdünntes und nicht mit anderen (Zusatz-)Mitteln vermischtes) Zusatzmittel 3 befindet. Im oberen Bereich des Vorratstanks ist bevorzugt ein Füllstandsmessgerät 9 angeordnet. Zweckmäßig ist das Füllstandsmessgerät 9, wie in dem zeichnerisch dargestellten Ausführungsbeispiel gezeigt, innerhalb des Vorratstanks an der der Einlassöffnung 7 gegenüberliegenden Seitenwand angeordnet. Ergänzend oder auch alternativ zu dem Füllstandsmessgerät 9 und ggf. ergänzend zu dem im Vorratsbehälter 1 angeordneten Durchflussmessgerät 9' kann auch in der Einlassöffnung 7 des Vorratstanks 5 ein Durchflussmessgerät angeordnet sein.

Mit den Füllstandsmessgeräten 9 oder den Durchflussmessgeräten 9' kann ermittelt werden, ob das sich in dem austauschbaren Vorratsbehälter 1 befindliche Zusatzmittel 3 vom Vorratsbehälter 1 in den integrierten Vorratstank 5 überführt wird, um diesen mit dem Zusatzmittel zu befüllen

Im Bereich des Tankbodens 14 befindet sich in einer Seitenwand des Vorratstanks 5 eine Auslassöffnung 15. Die Auslassöffnung 15 kann auch im Tankboden 14 des Vorratstanks 5 angeordnet sein. Die Auslassöffnung 15 des Vorratstanks 5 ist über eine Verbindungsleitung 16 mit einer Dosierpumpe 2 verbunden. Die Dosierpumpe 2 wiederum ist über eine weitere Verbindungsleitung 17 mit einem Reservoir für eine Behandlungsflüssigkeit der Fahrzeugbehandlungsanlage verbunden. In den Verbindungsleitungen 16 und 17 ist jeweils ein Rückschlagventil 18 angeordnet. Die Dosierpumpe 2 ist mit einer Steuereinheit 4 zur Steuerung der Dosierpumpe gekoppelt. Die Steuereinheit 4 umfasst eine Datenverarbeitungseinrichtung, welche wiederum mit dem Füllstandsmessgerät 9 und/oder den Durchflussmessgeräten 9' gekoppelt ist. Die von dem Füllstandsmessgerät 9 bzw. den Durchflussmessgeräten 9' erfassten Messwerte werden der Datenverarbeitungseinrichtung der Steuereinheit 4 zur weiteren Verarbeitung und zur Steuerung der Dosierpumpe zugeführt. In der Datenverarbeitungseinrichtung der Steuereinheit 4 sind darüber hinaus zweckmäßig weitere Daten zu dem in den austauschbaren Vorratsbehälter 1 enthaltenen Zusatzmitteln gespeichert. Zur Übermittlung der Daten des Zusatzmittels an die Datenverarbeitungseinrichtung der Steuereinheit 4 ist diese bevorzugt mit einer Sende-/Empfangseinheit gekoppelt, welche die Daten zu dem Zusatzmittel aus dem Datenträger 8 auslesen und an die Datenverarbeitungseinrichtung der Steuereinheit 4 weiterleiten kann. Es ist auch möglich, der Datenverarbeitungseinrichtung der Steuereinheit 4 beispielsweise über ein externes Dateneingabegerät (wie z. B. einen Datenträger oder eine drahtlose Datenverbindung) weitere Daten zu dem im Vorratsbehälter 1 enthaltenen Zusatzmittel zuzuleiten. Bei diesen Daten kann es sich beispielsweise um eine Viskositätskurve handeln, welche die Abhängigkeit der Viskosität des Zusatzmittels von der Temperatur und/oder vom Luftdruck angibt. Diese Daten können auch in dem Datenträger 8 gespeichert sein, der in dem austauschbaren Vorratsbehälter 1 angeordnet ist.

In dem integrierten Vorratstank 5 ist eine Belüftungsöffnung 19 vorgesehen. Diese ist zweckmäßig am oberen (offenen) Ende eines Steigrohrs 20 angeordnet. Die Belüftungsöffnung 19 gewährleistet eine Belüftung des Vorratstanks für den Fall, dass ein geleerter Vorratsbehälter 1 aus der Dosiervorrichtung genommen wird und nicht wieder durch einen neuen Vorratsbehälter ersetzt wird. In diesem Fall wird die Einlassöffnung 7 im Vorratstank 5 verschlossen. Über die Dosierpumpe wird das Zusatzmittel aus dem integrierten Vorratstank entnommen und es fließt kein neues Zusatzmittel aus dem Vorratsbehälter (Kartusche) nach. Im Vorratstank würde sich ohne eine zusätzliche Belüftung ein Unterdruck einstellen, den die Dosierpumpe 2 nicht mehr überwinden kann, wenn die Einlassöffnung 7 im Vorratstank 5 bei abgenommenem Vorratsbehälter verschlossen wird. Sobald aus dem Vorratstank Zusatzmittel 3 entnommen wird (ohne dass ein Vorratsbehälter 1 in der Dosiervorrichtung steckt) sinkt der Pegel in dem am Vorratstank angeordneten Steigrohr 20 und schließlich wird der Vorratstank 5 über die Belüftungsöffnung 19 im Steigrohr 20 belüftet. Beim Einsetzen eines neuen Vorratsbehälters 1 wird der integrierte Vorratstank 5 und das Steigrohr 20 wieder mit Zusatzmittel gefüllt, wie in Figur 1 gezeigt.

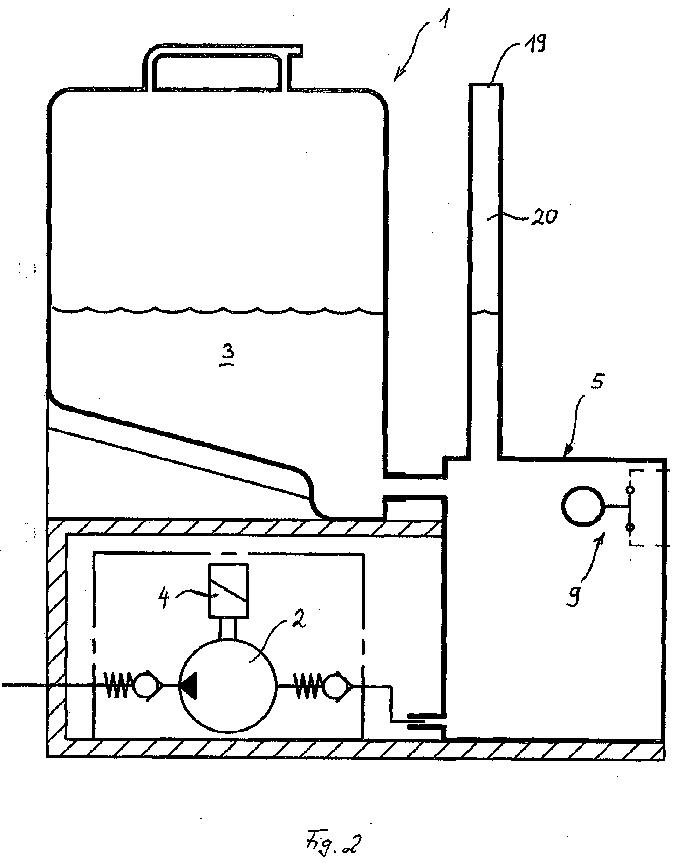

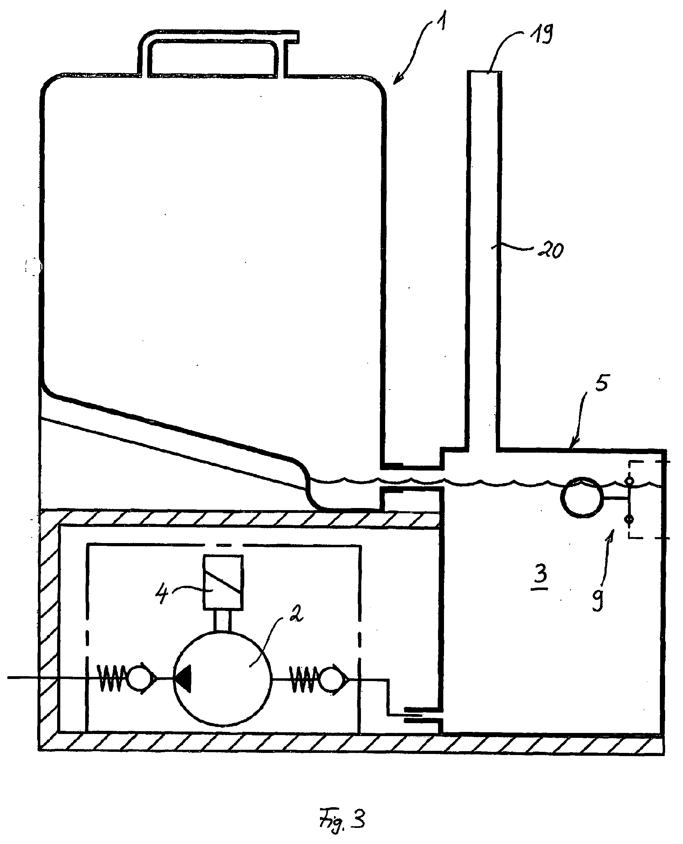

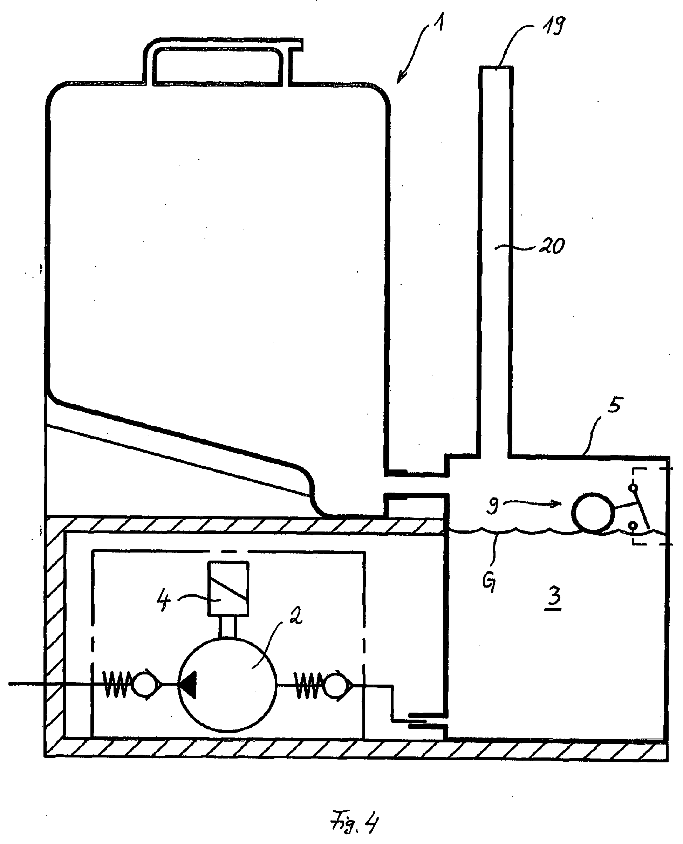

In Figur 1 ist die erfindungsgemäße Dosiervorrichtung mit einem vollständig gefüllten Vorratsbehälter 1 bestückt, wobei der Vorratsbehälter 1 über das Verbindungsstück 13 mit dem integrierten Vorratstank 5 in Verbindung steht. Durch diese Verbindung kann das sich in dem Vorratsbehälter 1 befindliche Zusatzmittel durch die Auslassöffnung 6 des Vorratsbehälters 1 und die Einlassöffnung 7 des Vorratstanks 5 in den Vorratstank 5 einfließen, bis dieser vollständig mit reinem (d.h. unverdünntem und nicht mit anderen (Zusatz-)Mitteln vermischtem) Zusatzmittel 3 gefüllt ist. Bei gefülltem Vorratstank 5 kann mittels der Dosierpumpe 2 das sich in dem Vorratstank 5 befindliche Zusatzmittel über die Verbindungsleitung 16 angesaugt und über die Verbindungsleitung 17 der Behandlungsflüssigkeit der Fahrzeugbehandlungsanlage zugeleitet werden. Während des Absaugens des sich im Vorratstank 5 befindlichen Zusatzmittels strömt Zusatzmittel 3 aus dem austauschbaren Vorratsbehälter in den Vorratstank 5 nach. In Figur 2 ist die Dosiervorrichtung mit einem etwa halb geleerten Vorratsbehälter 1 bei noch vollständig gefülltem Vorratstank 5 gezeigt. Bei weiterer Entnahme von Zusatzmittel aus dem Vorratstank 5 wird der austauschbare Vorratsbehälter 1 weiter entleert, bis - wie in Fig. 3 gezeigt - nur noch ein kleiner Rest an Zusatzmittel im austauschbaren Vorratsbehälter 1 enthalten ist. Sobald der Flüssigkeitsspiegel in dem austauschbaren Vorratsbehälter 1 das Niveau der Auslassöffnung 6 bzw. der Einlassöffnung 7 erreicht bzw. unterschritten hat, erfolgt kein Zulauf mehr von Zusatzmittel in den noch vollständig gefüllten Vorratstank 5. Dieser wird dann über die Belüftungsöffnung 19 im Steigrohr 20 belüftet (Figuren 3 und 4). Wird nun weiterhin Zusatzmittel durch Absaugen aus dem Vorratstank 5 entnommen, sinkt der Flüssigkeitspegel in dem Vorratstank 5 auf ein vorgegebenes Grenzniveau G, bei dem das Füllstandsmessgerät 9 ein Signal an die Steuereinheit 4 abgibt (Figur 4). Die Steuereinheit 4 zeigt dann durch ein akustisches oder optisches Signal das Unterschreiten des Flüssigkeitsspiegels in dem Vorratstank 5 unter das vorgegebene Grenzniveau an. Der Bediener erhält dadurch das Signal, dass der austauschbare Vorratsbehälter 1 weitgehend oder bereits vollständig geleert ist.

Auf der Grundlage der von den Messgeräten (Füllstandsmessgerät 9 und Durchflussmessgeräte 9') erfassten Messdaten und den in der Datenverarbeitungseinrichtung Steuereinheit 4 enthaltenen Material- und Umgebungsparameter berechnet nun die Steuereinheit 4 die noch zu erwartende Restlaufzeit der Dosiervorrichtung. Diese wird im Wesentlichen durch das vorhandene Volumen des Zusatzmittels in dem Vorratstank 5 und der von der Steuereinheit 4 eingestellten Dosierleistung der Dosierpumpe 2 bestimmt. Auf der Grundlage dieser Daten berechnet die Datenverarbeitungseinrichtung der Steuereinheit 4 die voraussichtliche Restlaufzeit der Dosiervorrichtung und gibt diese beispielsweise über ein Display oder über eine Datenleitung an eine entfernte Anzeigeeinrichtung aus. Bei der entfernten Anzeigeeinrichtung kann es sich beispielsweise um einen Computerbildschirm oder um ein smartphone handeln, welcher bzw. welches über eine Datenleitung oder eine drahtlose Datenverbindung mit der Steuereinheit 4 gekoppelt ist. Der Bediener kann auf der Grundlage der von der Steuereinheit 4 berechneten und angezeigten Restlaufzeit abschätzen, wann der geleerte Vorratsbehälter 1 gegen einen neuen, gefüllten Vorratsbehälter 1 ausgetauscht werden muss, um einen ununterbrochenen Betrieb der Fahrzeugbehandlungsanlage zu gewährleisten.

Zweckmäßig erfolgt die Einstellung der Dosierleistung (Dosiermenge pro Zeiteinheit) der Dosierpumpe 2 zunächst unter Berücksichtigung der Material- und Umgebungsparameter, wie z. B. der Wasserhärte und des pH-Werts der Behandlungsflüssigkeit, der Viskosität und der Konzentration des Zusatzmittels in dem Vorratsbehälter 1, der Temperatur, dem Luftdruck und der Luftfeuchte, usw. Der so eingestellte Soll-Wert der Dosierleistung kann durch die Datenverarbeitungseinrichtung der Steuereinheit 4 mit der tatsächlichen Ist-Dosierleistung der Dosierpumpe 2 verglichen werden. Die Ist-Dosierleistung der Dosierpumpe kann dabei beispielsweise während des Betriebs der Dosiervorrichtung durch Hubzählung der Dosierpumpe 2 ermittelt werden. Nach vollständiger Entleerung des Vorratsbehälters 1 (Figur 3) und Ausgeben eines entsprechenden Signals durch die Steuereinheit 4 erfolgt zweckmäßig eine Re-Kalibrierung der Soll-Dosierleistung der Dosierpumpe 2 unter Berücksichtung der ermittelten Ist-Dosierleistung und der erfassten Messdaten. Bei einer Anpassung der Soll-Dosierleistung kann, wenn dies zweckdienlich erscheint, die Restlaufzeit der Dosiervorrichtung beispielsweise dadurch verlängert werden, dass die Soll-Dosierleistung gegenüber der ermittelten Ist-Dosierleistung abgesenkt wird. Die Einstellung bzw. die Auswahl einer angepassten Soll-Dosierleistung kann dabei durch den Bediener direkt an der Steuereinheit 4 oder auch über eine Fernsteuerung der Steuereinheit 4 vorgenommen werden. Für eine Fernsteuerung der Steuereinheit 4 ist diese - wie auch für die Datenübermittelung-beispielsweise über eine Datenleitung mit einem entfernten Computer oder über eine drahtlose Datenverbindung mit einem entfernten smartphone verbunden.

Die erfindungsgemäße Dosiervorrichtung ermöglicht es, den austauschbaren Vorratsbehälter 1 vollständig zu entleeren, bevor dieser durch einen neuen, gefüllten Vorratsbehälter 1 ersetzt wird, ohne dass für den Austausch eines Vorratsbehälters die Fahrzeugsbehandlungsanlage stillgesetzt werden muss. Dies erweist sich insbesondere bei Vorratsbehältern mit hochkonzentrierten Zusatzmitteln als sehr vorteilhaft, weil diese hochkonzentrierten Zusatzmittel sehr teuer und Reste davon schwierig zu entsorgen sind. Der Bediener der Fahrzeugbehandlungsanlage erhält nämlich über die Steuereinheit zum Einen bei einer Entleerung des eingesetzten Vorratsbehälters 1 ein Signal und gleichzeitig einen Wert für die voraussichtliche Restlaufzeit der Dosiervorrichtung. Unter Berücksichtigung der von der Steuereinheit 4 ermittelten Restlaufzeit muss der Bediener nun nicht sofort den (weitgehend oder bereits vollständig) geleerten Vorratsbehälter 1 gegen einen neuen, gefüllten Vorratsbehälter austauschen. Er kann vielmehr zunächst noch einen Teil der zu erwartenden Restlaufzeit abwarten, und den Austausch daher auf einen späteren Zeitpunkt verschieben. Dies ist insbesondere dann von Vorteil, wenn sich der eingesetzte Vorratsbehälter 1 zu einem ungünstigen Zeitpunkt leert (beispielsweise am Wochenende), zu dem der Bediener nicht vor Ort an der Fahrzeugbehandlungsanlage ist. Es erweist sich auch dann als vorteilhaft, mit dem Austausch eines geleerten Vorratsbehälters gegen einen gefüllten Vorratsbehälter zu warten, wenn in der Fahrzeugbehandlungsanlage mehrere erfindungsgemäße Dosiervorrichtungen mit austauschbaren Vorratsbehältern 1 vorhanden sind. Der Bediener kann dann, unter Berücksichtung der ermittelten Restlaufzeit der Dosiervorrichtung für jedes einzelne Zusatzmittel, abwarten, bis mehrere dieser Vorratsbehälter mit unterschiedlichen Zusatzmitteln geleert worden sind und durch neue, gefüllte Vorratsbehälter ersetzt werden müssen. Der Austausch der verschiedenen Vorratsbehälter kann dann auf effiziente Weise in einem Arbeitsgang erfolgen. Die erfindungsgemäße Dosiervorrichtung und das erfindungsgemäße Verfahren ermöglichen daher einen sehr effizienten Austausch von geleerten Vorratsbehältern gegen neue, gefüllte Vorratsbehälter.

## Patentansprüche

1. Dosiervorrichtung zur Dosierung von Zusatzmitteln in Behandlungsflüssigkeiten einer Fahrzeugbehandlungsanlage, mit einem austauschbaren Vorratsbehälter (1) und einer mit dem Vorratsbehälter verbundenen Dosierpumpe (2), welche ein in dem Vorratsbehälter (1) enthaltenes Zusatzmittel (3) in die Behandlungsflüssigkeit dosiert, **dadurch gekennzeichnet, dass** die Dosiervorrichtung einen integrierten Vorratstank (5) enthält, welcher einerseits mit der Dosierpumpe (2) und andererseits mit dem Vorratsbehälter (1) in Verbindung steht.

2. Dosiervorrichtung nach Anspruch 1, **dadurch gekennzeichnet, dass** die Dosierpumpe (2) nur über den integrierten Vorratstank (5) mit dem austauschbaren Vorratsbehälter (1) in Verbindung steht.

3. Dosiervorrichtung nach einem der voranstehenden Ansprüche, **dadurch gekennzeichnet, dass** der austauschbare Vorratsbehälter (1) eine Auslassöffnung (6) aufweist, welche unmittelbar mit einer Einlassöffnung (7) im Vorratstank (5) in Verbindung steht, um das in dem Vorratsbehälter (1) enthaltene Zusatzmittel (3) in den Vorratstank (5) zu überführen.

4. Dosiervorrichtung nach einem der voranstehenden Ansprüche, **dadurch gekennzeichnet, dass** in dem Vorratstank (5) und/oder in dem Vorratsbehälter (1) ein Füllstandsmessgerät (9) oder ein Durchflußmessgerät (9') angeordnet ist.

5. Dosiervorrichtung nach einem der voranstehenden Ansprüche, **dadurch gekennzeichnet, dass** sie eine Steuereinheit (4) zur Steuerung der Dosierpumpe (2) umfasst, wobei die Steuereinheit (4) eine Datenverarbeitungseinrichtung aufweist.

6. Dosiervorrichtung nach Anspruch 5, wobei das Füllstandsmeßgerät (9) oder das Durchflußmessgerät (9') mit der Steuereinheit (4) gekoppelt ist, um den erfassten Füllstand bzw. die erfasste Durchflussmenge an die Datenverarbeitungseinrichtung der Steuereinheit (4) zu übermitteln.

7. Dosiervorrichtung nach Anspruch 5, **dadurch gekennzeichnet, dass** die Steuereinheit (4) die Dosierpumpe (2) in Abhängigkeit von Parametern steuert, welche der Datenverarbeitungseinrichtung zugeführt werden oder in einem Datenspeicher der Datenverarbeitungseinrichtung hinterlegt sind.

8. Dosiervorrichtung nach Anspruch 7, **dadurch gekennzeichnet, dass** die Parameter Umgebungsparameter, insbesondere die Umgebungstemperatur und/oder den Luftdruck und/oder die Luftfeuchte, und/oder Materialparameter, insbesondere die Viskosität des Zusatzmittels (3) und/oder den Härtegrad und/oder den pH-Wert der Behandlungsflüssigkeit, enthalten.

9. Dosiervorrichtung nach Anspruch 5, **dadurch gekennzeichnet, dass** die Steuereinheit (4) über eine Datenleitung oder eine drahtlose Datenverbindung von einem Ort ansteuerbar ist, der entfernt vom Standort der Dosiervorrichtung ist.

10. Dosiervorrichtung nach einem der voranstehenden Ansprüche, **dadurch gekennzeichnet, dass** der austauschbare Vorratsbehälter (1) mit einem Datenträger (8) versehen ist, welcher Daten zu dem im Vorratsbehälter (1) enthaltenen Zusatzmittel (3) enthält und dass eine Sende-/Empfangseinheit zur Datenübertragung zwischen dem Datenträger (8) und der Datenverarbeitungseinrichtung der Steuereinheit (4) vorgesehen ist.

11. Fahrzeugbehandlungsanlage mit einer Mehrzahl von Dosiervorrichtungen nach einem der voranstehenden Ansprüche, wobei jede Dosiervorrichtung eine Aufnahme für einen austauschbaren Vorratsbehälter (1), einen integrierten Vorratstank und eine Dosierpumpe (2) aufweist und die Dosierpumpen (2) der einzelnen Dosiervorrichtungen von einer zentralen Steuereinheit (4) gesteuert werden.

12. Verfahren zur Dosierung von Zusatzmitteln in Behandlungsflüssigkeiten einer Fahrzeugbehandlungsanlage mittels einer Dosiervorrichtung mit einem integrierten Vorratstank (5) und einer Dosierpumpe (2), welche mit dem Vorratstank (5) in Verbindung steht, mit folgenden Schritten:
- Bereitstellen eines austauschbaren Vorratsbehälters (1), der das Zusatzmittel enthält und Einsetzen des Vorratsbehälters (1) in eine dafür vorgesehene Aufnahme der Dosiervorrichtung,
- Herstellen einer Verbindung zwischen dem austauschbaren Vorratsbehälter (1) und dem in der Dosiervorrichtung integrierten Vorratstank (5) und Überführen des Zusatzmittels vom Vorratsbehälter (1) in den Vorratstank (5), bis dieser vollständig gefüllt ist,
- Absaugen des im Vorratstank (5) enthaltenen Zusatzmittels und Dosieren des abgesaugten Zusatzmittels in die Behandlungsflüssigkeit durch die Dosierpumpe.

13. Verfahren nach Anspruch 12, **gekennzeichnet durch** die weiteren Verfahrensschritte:
- Erfassen des Füllstands des Zusatzmittels in dem Vorratstank (5) und/oder des Durchflusses von Zusatzmittel vom austauschbaren Vorratsbehälter (1) in den Vorratstank (5),
- Abgeben eines Signals an eine Steuereinrichtung (4), sobald der erfasste Füllstand oder die Durchflussmenge einen vorgegebenen Grenzwert unterschreitet.

14. Verfahren nach Anspruch 12 oder 13, **gekennzeichnet durch** die weiteren Verfahrensschritte:
- Berechnen der noch zu erwartenden Restlaufzeit der Dosiervorrichtung unter Berücksichtigung des erfassten Füllstands oder der erfassten Durchflussmenge und/oder der bisherigen Dosierleistung der Dosiervorrichtung und/oder Umgebungsparameter und/oder Materialparameter.

15. Verfahren nach Anspruch 14, **wobei** die bisherige Ist-Dosierleistung der Dosiervorrichtung erfasst und bei der Berechnung der Restlaufzeit berücksichtigt wird, um eine Soll-Dosierleistung zu berechnen und einzustellen.

## Claims

1. Metering device for metering additives in treatment liquids of a vehicle treatment installation, with an exchangeable reservoir (1) and a metering pump (2) which is connected with the reservoir and meters an additive (3) contained in the reservoir (1) into the treatment liquid, **characterised in that** the metering device comprises an integrated supply tank (5) which is connected on the one hand with the metering pump (2) and on the other with the reservoir (1).

2. Metering device according to claim 1, **characterised in that** the metering pump (2) is only connected with the exchangeable reservoir (1) through the integrated supply tank (2).

3. Metering device according to one of the preceding claims, **characterised in that** the exchangeable reservoir (1) exhibits an outlet opening (6) which is connected directly with an inlet opening (7) in the supply tank (5) in order to transfer the additive (3) contained in the reservoir (1) to the supply tank (5).

4. Metering device according to one of the preceding claims, **characterised in that** a filling level measuring unit (9) or a flow rate measuring unit (9') is arranged in the supply tank (5) and/or in the reservoir (1).

5. Metering device according to one of the preceding claims, **characterised in that** it comprises a control unit (4) for controlling the metering pump (2), wherein the control unit (4) exhibits a data processing device.

6. Metering device according to claim 5, wherein the filling level measuring unit (9) or the flow rate measuring unit (9') is coupled with the control unit (4) in order to transmit the measured filling level or the measured flow rate to the data processing device of the control unit (4).

7. Metering device according to claim 5, **characterised in that** the control unit (4) controls the metering pump (2) according to parameters which are fed to the data processing device or lodged in a data store of the data processing device.

8. Metering device according to claim 7, **characterised in that** the parameters include ambient parameters, in particular the ambient temperature and/or the air pressure and/or the air humidity, and/or material parameters, in particular the viscosity of the additive (3) and/or the hardness and/or the pH value of the treatment liquid.

9. Metering device according to claim 5, **characterised in that** the control unit (4) can be actuated by means of a data line or a wireless data connection from a location which is remote from the location of the metering device.

10. Metering device according to one of the preceding claims, **characterised in that** the exchangeable reservoir (1) is provided with a data carrier (8) which holds data on the additive (3) contained in the reservoir (1) and **in that** a transmitting/receiving unit is provided for transmission of data between the data carrier (8) and the data processing device of the control unit (4).

11. Vehicle treatment installation with a plurality of metering devices according to one of the preceding claims, wherein each metering device exhibits a mounting receptacle for an exchangeable reservoir (1), an integrated supply tank and a metering pump (2), and the metering pumps (2) of the individual metering devices are controlled by a central control unit (4).

12. Method for metering additives in treatment liquids of a vehicle treatment installation by means of a metering device with an integrated supply tank (5) and a metering pump (2) which is connected with the supply tank (5), with the following steps:
- provision of an exchangeable reservoir (1) which contains the additive and insertion of the reservoir (1) in a mounting receptacle provided for it in the metering device,
- production of a connection between the exchangeable reservoir (1) and the supply tank (5) integrated in the metering device and transfer of the additive from the reservoir (1) to the supply tank (5) until the latter is completely filled,
- extraction of the additive contained in the supply tank (5) and metering of the extracted additive into the treatment liquid by the metering pump.

13. Method according to claim 12, **characterised by** the further method steps:
- measurement of the filling level of the additive in the supply tank (5) and/or the flow rate of additive from the exchangeable reservoir (1) into the supply tank (5),
- emission of a signal to a control unit (4) as soon as the measured filling level or the flow rate falls below a preset limit value.

14. Method according to claim 12 or 13, **characterised by** the further method steps:
- calculation of the remaining running time of the metering device to be expected allowing for the measured filling level or the measured flow rate and/or the metering output of the metering device up to that point and/or ambient parameters and/or material parameters.

15. Method according to claim 14, wherein the actual metering output of the metering device up to that point is measured and taken into account in the calculation of the remaining running time in order to calculate and set a nominal metering output.

## Revendications

1. Dispositif de dosage servant à doser des additifs dans des liquides de traitement d'une installation de traitement pour véhicule, comprenant un contenant de stockage (1) remplaçable et une pompe de dosage (2) reliée au contenant de stockage, laquelle pompe de dosage dose dans le liquide de traitement un additif (3) contenu dans le contenant de stockage (1), **caractérisé en ce que** le dispositif de dosage contient un réservoir de stockage (5) intégré, qui est relié d'une part à la pompe de dosage (2) et d'autre part au contenant de stockage (1).

2. Dispositif de dosage selon la revendication 1, **caractérisé en ce que** la pompe de dosage (2) est reliée, uniquement par l'intermédiaire du réservoir de stockage (5) intégré, au contenant de stockage (1) remplaçable.

3. Dispositif de dosage selon l'une quelconque des revendications précédentes, **caractérisé en ce que** le contenant de stockage (1) remplaçable présente une ouverture de sortie (6), qui est reliée directement à une ouverture d'entrée (7) dans le réservoir de stockage (5) afin de transférer dans le réservoir de stockage (5) l'additif (3) contenu dans le contenant de stockage (1).

4. Dispositif de stockage selon l'une quelconque des revendications précédentes, **caractérisé en ce qu'**un appareil de mesure de niveau de remplissage (9) ou un débitmètre (9') est disposé dans le réservoir de stockage (5) et/ou dans le contenant de stockage (1).

5. Dispositif de dosage selon l'une quelconque des revendications précédentes, **caractérisé en ce qu'**il comprend une unité de commande (4) servant à commander la pompe de dosage (2), sachant que l'unité de commande (4) présente un système de traitement de données.

6. Dispositif de dosage selon la revendication 5, sachant que l'appareil de mesure de niveau de remplissage (9) ou le débitmètre (9') est couplé à l'unité de commande (4) afin de transmettre le niveau de remplissage détecté ou le débit détecté au système de traitement de données de l'unité de commande (4).

7. Dispositif de dosage selon la revendication 5, **caractérisé en ce que** l'unité de commande (4) commande la pompe de dosage (2) en fonction de paramètres, qui sont amenés au système de traitement de données ou qui sont enregistrés dans une mémoire de données du système de traitement de données.

8. Dispositif de dosage selon la revendication 7, **caractérisé en ce que** les paramètres contiennent des paramètres ambiants, en particulier la température ambiante et/ou la pression de l'air et/ou l'humidité de l'air, et/ou des paramètres de matériau, en particulier la viscosité de l'additif (3) et/ou le degré de dureté, et/ou la valeur pH du liquide de traitement.

9. Dispositif de dosage selon la revendication 5, **caractérisé en ce que** l'unité de commande (4) peut être commandée par l'intermédiaire d'une ligne de données ou d'une liaison de données sans fil depuis un site, lequel site est éloigné de l'emplacement du dispositif de dosage.

10. Dispositif de dosage selon l'une quelconque des revendications précédentes, **caractérisé en ce que** le récipient de stockage (1) remplaçable est pourvu d'un support de données (8), qui contient des données portant sur l'additif (3) contenu dans le contenant de stockage (1), et **en ce qu'**une unité d'émission/de réception servant à la transmission de données est prévue entre le support de données (8) et le système de traitement de données de l'unité de commande (4).

11. Installation de traitement pour véhicule comprenant une multitude de dispositifs de dosage selon l'une quelconque des revendications précédentes, sachant que chaque dispositif de dosage présente un logement pour un contenant de stockage (1) remplaçable, un réservoir de stockage intégré et une pompe de dosage (2) et que les pompes de dosage (2) des divers dispositifs de dosage sont commandées par une unité de commande (4) centrale.

12. Procédé servant à doser des additifs dans des liquides de traitement d'une installation de traitement pour véhicule au moyen d'un dispositif de dosage comprenant un réservoir de stockage (5) intégré et une pompe de dosage (2), qui est reliée au réservoir de stockage (5), comprenant les étapes suivantes consistant à :
- fournir un contenant de stockage (1) remplaçable, qui contient l'additif, et insérer le contenant de stockage (1) dans un logement, prévu à cet effet, du dispositif de dosage ;
- établir une liaison entre le contenant de stockage (1) remplaçable et le réservoir de stockage (5) intégré dans le dispositif de dosage, et transférer l'additif du contenant de stockage (1) dans le réservoir de stockage (5), jusqu'à ce que ce dernier soit rempli en totalité ;
- évacuer par aspiration l'additif contenu dans le réservoir de stockage (5), et doser l'additif évacué par aspiration dans le liquide de traitement par la pompe de dosage.

13. Procédé selon la revendication 12, **caractérisé par** les étapes de procédé qui suivent :
- détecter le niveau de remplissage de l'additif dans le réservoir de stockage (5) et/ou du débit de l'additif depuis le contenant de stockage (1) remplaçable dans le réservoir de stockage (5) ;
- envoyer un signal à un système de commande (4) dès que le niveau de remplissage détecté ou le débit présente une valeur inférieure à une valeur limite prédéfinie.

14. Procédé selon la revendication 12 ou 13, **caractérisé par** les étapes de procédé supplémentaires :
- calculer la durée d'utilisation restant prévisible du dispositif de dosage en tenant compte du niveau de remplissage détecté ou du débit détecté et/ou de la puissance de dosage actuelle jusqu'à présent du dispositif de dosage et/ou des paramètres ambiants et/ou des paramètres de matériau.

15. Procédé selon la revendication 14, sachant que la puissance de dosage réelle actuelle jusqu'à présent du dispositif de dosage est détectée et est prise en compte dans le cadre du calcul de la durée d'utilisation restante afin de calculer et de régler une puissance de dosage de consigne.
